(19) **Europäisches Patentamt**

**European Patent Office**

**Office européen des brevets**

(11) **EP 1 486 027 B1**

(12) **EUROPEAN PATENT SPECIFICATION**

(45) Date of publication and mention
of the grant of the patent:
**28.12.2005 Bulletin 2005/52**

(51) Int Cl.⁷: **H04L 9/08**

(86) International application number:
**PCT/IB2003/000655**

(21) Application number: **03743944.5**

(22) Date of filing: **14.02.2003**

(87) International publication number:
**WO 2003/077470 (18.09.2003 Gazette 2003/38)**

(54) **Polynomial-based multi-user key generation and authentication method and system**

Mehrbenutzerschlüsselerzeugung auf polynombasis und Authentisierungsverfahren uns System

Géneration de clé à utilisateurs multiples à base polynomiale ains que procédé et systeme d'authentification

(84) Designated Contracting States:
**AT BE BG CH CY CZ DE DK EE ES FI FR GB GR HU IE IT LI LU MC NL PT SE SI SK TR**

(30) Priority: **13.03.2002 EP 02075983**

(43) Date of publication of application:
**15.12.2004 Bulletin 2004/51**

(73) Proprietor: **Koninklijke Philips Electronics N.V.**
**5621 BA Eindhoven (NL)**

(72) Inventors:
• **TUYLS, Pim, T.**
**NL-5656 AA Eindhoven (NL)**
• **KEVENAAR, Thomas, A., M.**
**NL-5656 AA Eindhoven (NL)**
• **SCHRIJEN, Geert, J.**
**NL-5656 AA Eindhoven (NL)**
• **VAN DIJK, Marten, E.**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
• **MENEZES, VANSTONE, OORSCHOT:**
**"Handbook of applied cryptography" 1997 , CRC PRESS , USA XP002244107 * page 405 - page 410 * * page 524 - page 527 ***
• **ROLF BLOM: "Non-Public Key Distribution" SPRINGER-VERLAG. CRYPTO 82, 1982, XP002244106**

**Description**

The invention relates to a method of generating a common secret between a first party and a second party, in which the first party holds a value $p_1$ and a symmetrical polynomial P(x,y) fixed in the first argument by the value $p_1$, and the first party performs the steps of sending the value $p_1$ to the second party, receiving a value $p_2$ from the second party and calculating the secret $S_1$ by evaluating the polynomial $P(p_1, y)$ in $p_2$.

The invention further relates to a system comprising a first party, a second party and a trusted third party, arranged to execute such a method, to devices arranged to function as first or second party in this system and to a computer program product.

An embodiment of the method according to the preamble is known from R. Blom, Non-public key distribution, Advances in Cryptology-Proceedings of Crypto 82, 231-236, 1983.

Authentication plays an important role in digital communication networks and in content protection systems. Devices that communicate with each other need to be convinced of each other's trustworthiness. They should not give confidential information to a non-trusted party. Authentication procedures are often based on public key techniques which require a lot of processing power. In many applications this (processing) power is not available in which case these public key techniques can not be applied straightforwardly.

A solution that is sometimes proposed, is based on the use of symmetric ciphers which consume much less power. However these suffer from the drawback that they require a global system secret in each device which is not desirable for products that come in large numbers.

Digital communication networks are becoming more and more common also in CE applications and drive the need for cheap and low power authentication protocols. Although this power constraint is in general true for portable CE devices and smart-cards etc., it is especially tight in "Chip In Disc" (CID) type-products, such as described in international patent application WO 02/017316 (attorney docket PHNL010233) by the same applicant as the present application.

The basic approach behind CID is to put a chip on a carrier like a CD or DVD, which is then used for content protection purposes. The chip will allow the player to play the content (give it access to the descramble keys it carries) as soon as it is convinced that the player can be trusted. On the other hand, the player will not play any content on a non-trusted disc. Therefore both, the player and the CID need some means for authentication.

It is important to note that the chip has only very limited power (approximately 0.5 mW) at its disposal and can therefore not carry out very complicated calculations. This means that public key techniques (such as RSA or ElGamal) cannot be used immediately. The CID authentication problem is a typical example of an authentication problem in the CE world.

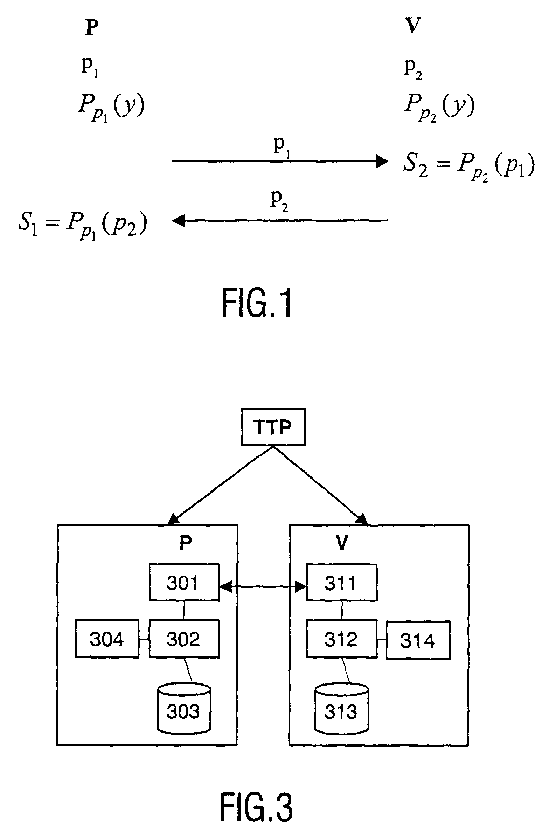

The article by Blom referenced above discloses a common key or conference key generation method using a secret sharing protocol based on a symmetric polynomial in two variables. This protocol is illustrated in Fig. 1. Basically, one party, called the *prover* (abbreviated as P) tries to convince another party in the system, called the *verifier* (abbreviated as V) that he knows a secret that is also known to the verifier. If the verifier is convinced, the prover is authenticated.

In the system, a Trusted Third Party (TTP) chooses a symmetric $(n+1) \times (n+1)$ matrix T, whose entries $t_{ij}$ represent respective coefficients of an *n*-th degree polynomial P in two variables, which is defined as follows:

$$P(x, y) = \sum_{i, j=0}^{n} t_{ij} x^i y^j$$

It is clear that *P(x, y) = P(y, x)* for all *x* and *y* in the domain of the polynomial. The polynomial P can be projected on the space of n-th degree polynomials in one variable by fixing the argument x to a certain value, say *p*: $P_p(y) = P(p, y)$. From the definition of the polynomial P, the symmetry of the matrix T and the resulting symmetry of P(x, y) it then follows that $P_p(q) = P_q(p)$ for all p and q.

According to Blom, every device that needs to be able to generate a common secret with an other device receives a pair $(P_p(y), p)$, i.e. the polynomial P fixed in p and the value p which was used to generate $P_p(y)$ from P(x, y). The shared secret between the devices $(P_p, p)$ and (Pq, q) is given by $P_p(q) = P_q(p)$ which is generated by exchanging p and q and evaluating the polynomials to yield a secret $S_1$ for P and $S_2$ for V.

In this approach the global secret consists of the matrix T which has ½(n+1)(n+2) independent entries because it is symmetric. A share of this secret is given to every party in the form of a respective value p and the polynomial $P_p(y)$ with n + 1 coefficients of the form

$$g_j = \sum_{i=0}^{n} t_{ij} p^i$$

This gives every party n+1 linear equations in the ½(n+1)(n+2) unknowns $t_{ij}$ which makes it clear that one party can not retrieve the global secret T. Only if n+1 parties, all with a different value p cooperate will it be possible to retrieve the matrix T.

This presents a major drawback of the known protocol: if a sufficient number of parties cooperate, the global secret T can be retrieved, unless the number of different values of $p_i$ is less than n+1. But this means that the number of different shares is limited to the degree of the polynomial to prevent revealing the global system secret T. Furthermore, when two parties communicate they always generate the same common secret.

It is an object of the invention to provide a method according to the preamble, which allows a greater number of different shares of the global secret to be distributed to parties without having to increase the order of the polynomial P.

This object is achieved according to the invention in a method which is characterized in that the first party additionally holds a value $q_1$ and a symmetrical polynomial Q(x, y) fixed in the first argument by the value $q_1$, and further performs the steps of sending $q_1$ to the second party, receiving a value $q_2$ from the second party and calculating the secret $S_1$ as $S_1=Q(q_1, q_2) \cdot P(p_1, p_2)$.

While the number of values for $p_i$ is still limited to n, a larger number of different shares can now be distributed to the parties. The number of values for $q_i$ in the total system is not limited by the degree of the polynomial P, as is the case in the Blom system, but only by the number of possible elements $q_i$ in the domain of Q. This makes it possible for a sufficient number of $q_i$'s to supply every party with a unique share of the global secret.

In an embodiment the first party further performs the steps of obtaining a random number $r_1$, calculating $r_1 \cdot q_1$, sending $r_1 \cdot q_1$ to the second party, receiving $r_2 \cdot q_2$ from the second party and calculating the secret $S_1$ as $S_1=Q(q_1, r_1 \cdot r_2 \cdot q_2) \cdot P(p_1, p_2)$. The random numbers $r_1$ and $r_2$ hide the values of $q_1$ and $q_2$, which makes it very difficult for an eavesdropper or a non-compliant device to learn something about $q_1$ and $q_2$. Secondly, the values of $r_1$ and $r_2$ end up multiplicatively in the results of the evaluation of the polynomials P and Q, and thus the calculated secrets $S_1$ and $S_2$ have a random character, too. This means that, if $S_1$ and $S_2$ are used as a key in a symmetric cipher later on, it will be difficult for an eavesdropper to break the encryption. Additionally, a different common secret can now be generated at every new session between two devices.

In a further embodiment the first party holds the value $q_1$ multiplied by an arbitrarily chosen value r, and the product $Q(q_1, z)P(p_1, y)$ instead of the individual polynomials $P(p_1, y)$ and $Q(q_1, z)$, and the first party performs the steps of calculating $r_1 \cdot r \cdot q_1$, sending $r_1 \cdot r \cdot q_1$ to the second party, receiving $r_2 \cdot r \cdot q_2$ from the second party and calculating the secret $S_1$ as $S_1=Q(q_1, r_1 \cdot r_2 \cdot r \cdot q_2) \cdot P(p_1, p_2)$. This way, the values $q_1$ and $q_2$ are hidden to an adversary who gains access to a device and tries to learn the global secret T and/or the values $q_1$ or $q_2$.

In a further embodiment the first party and the second party use a non-linear function on the generated secret S1 and S2, respectively, before using it as a secret key in further communications. The non-linear function is preferably implemented as a one-way hash function but can also take the form of a polynomial. Using a non-linear function makes the scheme forward and backward secure. In other words, even if an attacker manages to obtain a key, he cannot derive previous or subsequent keys from this obtained key.

Preferably, the first party subsequently verifies that the second party knows the secret $S_1$. The first party could apply a zero-knowledge protocol to verify that the second party knows the secret $S_1$. Preferably this protocol is the Guillou-Quisquater protocol with public values *e* and *m*. This has the advantage that in the present invention the Guillou-Quisquater protocol can be very secure for low values of *e* because it does not allow an adversary to anticipate a challenge. Furthermore it is efficient in terms of communication and memory usage.

Alternatively, the first party can apply a commitment-based protocol to verify that the second party knows the secret $S_1$. Using a commitment protocol based on a symmetric cipher such as DES, Lombok or AES is very efficient in terms of power consumption in a device executing the method. Preferably, the first party subsequently uses the same symmetric cipher as a commit function to commit himself to a decryption of the encrypted random challenge. This has the additional advantage that the complexity of the implementation is now reduced, as the hardware and/or software for encrypting the challenge can be reused for executing the commit function.

Other advantageous embodiments are set out in the dependent claims.

These and other aspects of the invention will be apparent from and elucidated with reference to the embodiments shown in the drawings, in which:

Fig. 1 illustrates a secret sharing protocol based on a symmetric polynomial in two variables according to Blom;
Fig. 2 schematically shows a system comprising devices interconnected via a network, the devices being arranged to operate in accordance with the invention;

Fig. 3 schematically shows a generalization of the system of Fig. 2, comprising a prover, a verifier and a trusted third party;

Fig. 4 illustrates a secret sharing protocol between the prover and the verifier, based on two symmetrical polynomials each in two variables;

Fig. 5 illustrates a variation on the protocol of Fig. 4 in which the two polynomials are symmetrical only in a limited number of points;

Fig. 6 illustrates the Guillou-Quisquater protocol; and

Fig. 7 illustrates a commitment-based protocol.

Throughout the figures, same reference numerals indicate similar or corresponding features. Some of the features indicated in the drawings are typically implemented in software, and as such represent software entities, such as software modules or objects.

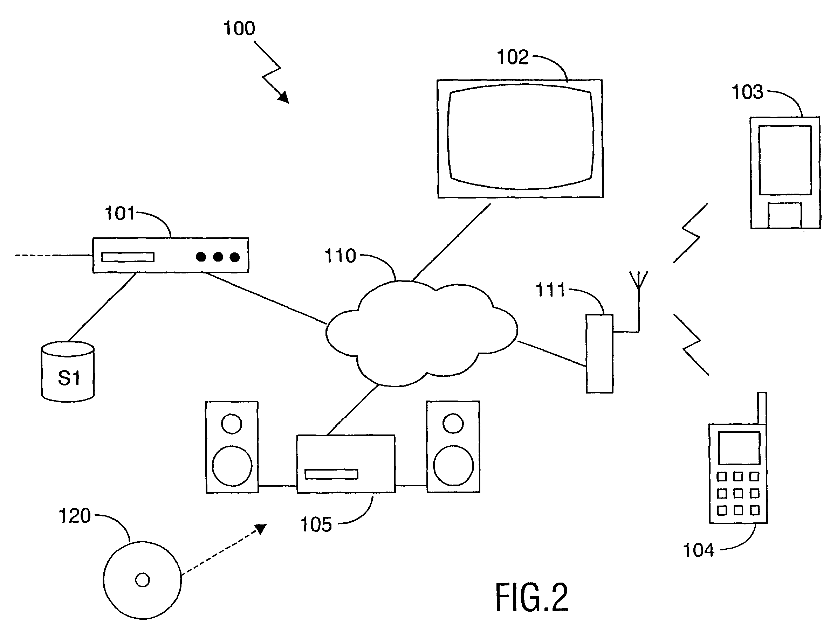

Fig. 2 schematically shows a system 100 comprising devices 101-105 interconnected via a network 110. In this embodiment, the system 100 is an in-home network. A typical digital home network includes a number of devices, e.g. a radio receiver, a tuner/decoder, a CD player, a pair of speakers, a television, a VCR, a tape deck, and so on. These devices are usually interconnected to allow one device, e.g. the television, to control another, e.g. the VCR. One device, such as e.g. the tuner/decoder or a set top box (STB), is usually the central device, providing central control over the others.

Content, which typically comprises things like music, songs, movies, TV programs, pictures and the likes, is received through a residential gateway or set top box 101. The source could be a connection to a broadband cable network, an Internet connection, a satellite downlink and so on. The content can then be transferred over the network 110 to a sink for rendering. A sink can be, for instance, the television display 102, the portable display device 103, the mobile phone 104 and/or the audio playback device 105.

The exact way in which a content item is rendered depends on the type of device and the type of content. For instance, in a radio receiver, rendering comprises generating audio signals and feeding them to loudspeakers. For a television receiver, rendering generally comprises generating audio and video signals and feeding those to a display screen and loudspeakers. For other types of content a similar appropriate action must be taken. Rendering may also include operations such as decrypting or descrambling a received signal, synchronizing audio and video signals and so on.

The set top box 101, or any other device in the system 100, may comprise a storage medium S1 such as a suitably large hard disk, allowing the recording and later playback of received content. The storage S1 could be a Personal Digital Recorder (PDR) of some kind, for example a DVD+RW recorder, to which the set top box 101 is connected. Content can also be provided to the system 100 stored on a carrier 120 such as a Compact Disc (CD) or Digital Versatile Disc (DVD).

The portable display device 103 and the mobile phone 104 are connected wirelessly to the network 110 using a base station 111, for example using Bluetooth or IEEE 802.11b. The other devices are connected using a conventional wired connection. To allow the devices 101-105 to interact, several interoperability standards are available, which allow different devices to exchange messages and information and to control each other. One well-known standard is the Home Audio/Video Interoperability (HAVi) standard, version 1.0 of which was published in January 2000, and which is available on the Internet at the address http://www.havi.org/. Other well-known standards are the domestic digital bus (D2B) standard, a communications protocol described in IEC 1030 and Universal Plug and Play (http://www.upnp.org).

It is often important to ensure that the devices 101-105 in the home network do not make unauthorized copies of the content. To do this, a security framework, typically referred to as a Digital Rights Management (DRM) system is necessary.

In one such framework, the home network is divided conceptually in a conditional access (CA) domain and a copy protection (CP) domain. Typically, the sink is located in the CP domain. This ensures that when content is provided to the sink, no unauthorized copies of the content can be made because of the copy protection scheme in place in the CP domain. Devices in the CP domain may comprise a storage medium to make temporary copies, but such copies may not be exported from the CP domain. This framework is described in International patent application PCT/ IB02/04803 (attorney docket PHNL010880) by the same applicant as the present application.

Regardless of the specific approach chosen, all devices in the in-home network that implement the security framework do so in accordance with the implementation requirements. Using this framework, these devices can authenticate each other and distribute content securely. Access to the content is managed by the security system. This prevents the unprotected content from leaking to unauthorized devices and data originating from untrusted devices from entering the system.

It is important that devices only distribute content to other devices which they have successfully authenticated beforehand. This ensures that an adversary cannot make unauthorized copies using a malicious device. A device will only be able to successfully authenticate itself if it was built by an authorized manufacturer, for example because only authorized manufacturers know a particular secret necessary for successful authentication or their devices are provided with a certificate issued by a Trusted Third Party.

SECRET SHARING

In any authentication scheme some global secret or common information must be present and any party that wants to authenticate itself to another party must have at least some information in common with the other party. Although it is theoretically possible to give the global secret to every device, in practice this is not recommended: if the global secret becomes known (by, for example, hacking one device), adversaries can take over the role of the Trusted Third Party (TTP) which distributed the global secret to trusted parties in the first place. This way, non-compliant devices enter the system and the security of the initial system is compromised making authentication futile. It will be impossible to detect the non-compliant devices because the total global secret is known.

A possible way to solve this is secret sharing: every trusted party gets a share of the global secret. This share is sufficient to be able to authenticate itself to an other party but a large number of shares is required to reconstruct the global secret (if possible at all). When one device is compromised, only a share of the global secret becomes known and measures can be taken to revoke this device.

The present invention uses a secret sharing protocol to allow the parties to determine a common secret. Usually the parties will then verify that the other knows the secret, see section "SECRET VERIFICATION" below. However, the parties might also go ahead without an explicit check. For instance, the secret could be used as an encryption key to encrypt some information sent to the other party. If the other party does not have the same secret, he cannot decrypt the information. This implicitly authorizes the other party.

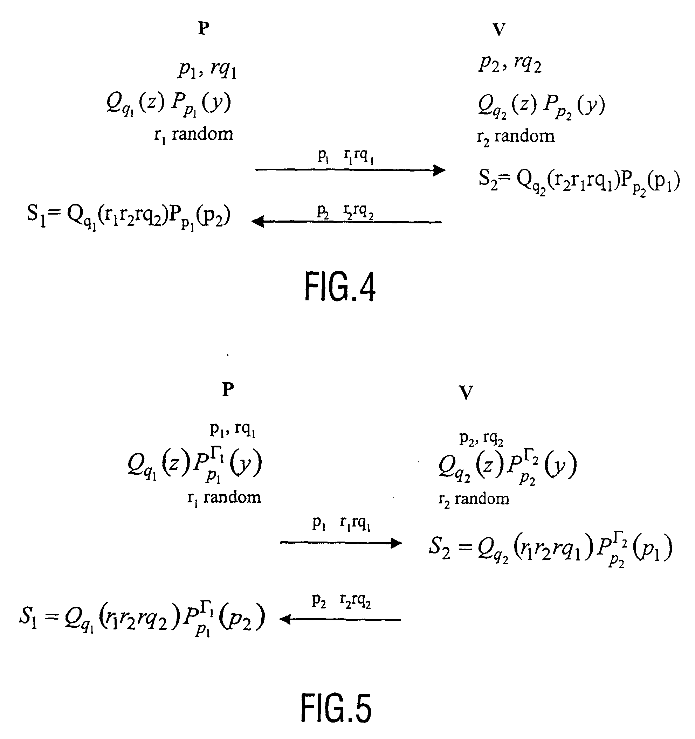

Fig. 3 schematically shows a generalization of the system of Fig. 2, comprising a prover P, a verifier V and a trusted third party TTP. In accordance with the present invention, the verifier V wants to authenticate the prover P using information received from the trusted third party TTP. Preferably the authentication is mutual, so that the prover P also knows the verifier V is authentic.

The information necessary to authenticate the verifier V to the prover P is assumed to have been distributed from the TTP to the parties P and V beforehand. This can be done over a communication channel between the parties P and V and the TTP. This makes the protocol dynamic and allows easy updating of the information in case an adversary manages to obtain unauthorized access to a previously distributed secret.

The prover P and verifier V can be devices such as the carrier 120, equipped with a chip that provides the necessary functionality, and the audio playback device 105. In such a case, there will most likely not be a communications channel from the TTP to prover and verifier. Distribution of the secrets must then be done beforehand, for example in the factory where the carrier 120 or the device 105 is manufactured.

The prover P comprises a networking module 301, a cryptographic processor 302 and a storage medium 303. Using the networking module 301, the prover P can send data to and receive data from the verifier V. The networking module 301 could be connected to the network 110, or establish a direct connection (e.g. a wireless channel) with the verifier V.

The cryptographic processor 302 is arranged to execute the method according to the invention. Usually, this processor 302 is realized as a combination of hardware and software, but it could also be realized entirely in hardware or software, e.g. as a collection of software modules or objects.

The prover P can e.g. store the coefficients of the polynomials P and Q in the storage medium 303, but might also use it to hold some content that it wants to distribute to the verifier V after a successful authentication. The storage medium 303 may further be used to store the information received from the TTP. To enhance the security of the system, rather than storing the individual polynomials P and Q, the product $Q_q(z)P_p(y)$ should be stored instead.

Similarly, the verifier V comprises a networking module 311, a cryptographic processor 312 and a storage 313 with functionality corresponding to that of the prover P. If the verifier V is embodied as a carrier 120 with Chip-In-Disc, then the storage 313 may correspond to the storage available to any (optical) disc but preferably is stored in ROM on the Chip-In-Disc.

Additionally, the prover P and the verifier V may be provided with a pseudo-random number generator 304, 314 (in hard- and/or software) that provides cryptographically strong pseudo-random numbers. These numbers are used in preferred embodiments of the method according to the invention. Several embodiments to authenticate the prover P to the verifier V will now be discussed with reference to Figs. 4 and 5.

GENERATING A COMMON SECRET USING TWO SYMMETRICAL POLYNOMIALS

Fig. 4 illustrates a secret sharing protocol based on two symmetrical polynomials each in two variables according to a preferred embodiment of the invention. Parts of the set-up and steps performed by the parties have already been explained above with reference to Fig. 1, and will not be repeated here.

The symmetric polynomial P is multiplied by a symmetrical polynomial Q(x, z), e.g. Q(x, z) = x.z. In addition to fixing the polynomial P in $p_i$, the polynomial Q is now fixed in $q_i$ as well. The prover now receives from the TTP, instead of the polynomial P fixed in $p_1$, the product of the reduced polynomials:

$$Q(q_1,z)P(p_1,y) = Q_{q_1 1}(z)P_{p_1}(y)$$

as well as the values $p_1$ and $q_1$. Similarly, the verifier receives, instead of the polynomial P fixed in $p_2$, the product of the reduced polynomial

$$Q(q_2,z)P(p_2,y) = Q_{q_2}(z)P_{p_2}(y)$$

as well as the values $p_2$ and $q_2$. Preferably the prover and the verifier store the polynomials in the form of their coefficients:

$$g_{1j} = q_1 \sum_{i=0}^{n} t_{ij} p_1^i \text{ and } g_{2j} = q_2 \sum_{i=0}^{n} t_{ij} p_2^i$$

Preferably the values $q_1$ and $q_2$ are first multiplied by a random factor r by the TTP. This way, the values $q_1$ and $q_2$ are hidden to an adversary who may gain unauthorized access to the device embodying the prover and/or the verifier, preventing him from passing off as an authorized device.

From the above it follows that

$$Q_{q_1}(rq_2)P_{p_1}(p_2) = q_1 r q_2 P(p_1,p_2) = q_2 r q_1 P(p_2,p_1) = Q_{q_2}(rq_1)P_{p_2}(p_1)$$

which demonstrates that the prover and the verifier are able to generate a common secret as the product of the polynomials P and Q using the elements $p_i$ and $q_i$ which they have and the elements $p_i$ and $q_i$ which they receive from the other party, even when the blinding factor r is used to hide the actual values of $q_i$.

If we now limit the number of values for $p_i$ to n or less, the coefficients of the polynomials P and Q can not be retrieved. The number of values for $q_i$ in the total system is not limited by the degree of the polynomial P, as is the case in the Blom system, but only by the number of possible elements $q_i$ in the domain of Q. This makes it possible for a sufficient number of values $q_i$ to supply every party with a unique share of the global secret.

Having received the product of the polynomials P and Q and the values $p_i$ and $q_i$ (or $r \cdot q_i$), the parties P and V now attempt to generate a common secret, as illustrated in Fig. 4. Both parties exchange their values of $p_i$ and $q_i$ (or $r \cdot q_i$), and compute their respective secrets $S_1$ and $S_2$. Preferably the parties P and V first generate respective random numbers $r_1$ and $r_2$. Then they compute $r_1 \cdot q_1$ and $r_2 \cdot q_2$ respectively and exchange these products instead of the values $q_1$ and $q_2$ themselves. This has several advantages, amongst which is the fact that the random numbers $r_1$ and $r_2$ hide the values of $q_1$ and $q_2$, which makes it very difficult for an eavesdropper or a non-compliant device to learn something about $q_1$ and $q_2$. Additionally, it makes it possible for either of the parties (say, the prover P) to calculate its secret $S_1$ as

$$S_1=Q(q_1, r_1 \cdot r_2 \cdot q_2) \cdot P(p_1, p_2)$$

A further improvement of the system can be achieved by both parties applying a non-linear function to the calculated secret S1 and S2 before using it as a secret key. The non-linear function is preferably implemented as a one-way hash function but can also take the form of a polynomial.

GENERATING A COMMON SECRET USING LIMITED SYMMETRICAL POLYNOMIALS

Fig. 5 illustrates a variation on the protocol of Fig. 4 in which the polynomial P is symmetrical only in a limited number of points. The polynomial P is based on a symmetric matrix T and it can be shown that the polynomial P(x, y) is symmetrical for all values of x and y in the domain of P. However, if more than n different values $p_i$ are used, an adversary can theoretically reconstruct the matrix T. Therefore the polynomial P needs only be symmetric in $m$ values $p_1, ..., p_m$ with $m \leq n$. In order to explain how to build polynomials which are symmetric only in a limited number of points, we first present some definitions.

The inner product of two $n$-dimensional vectors $\vec{x} = (x_1, ..., x_n)$ and $\vec{y} = (y_1, ..., y_n)$ is given by

$$\langle \vec{x}, \vec{y} \rangle = \sum_{i=1}^{n} x_i y_i \;.$$

The tensor product $\vec{x} \otimes \vec{y}$ of $\vec{x}$ and $\vec{y}$ is given by $\vec{x} \otimes \vec{y} = (x_1\vec{y}, ..., x_n\vec{y})$.

The Vandermonde vector $\vec{p}^{Vn}$ of length n+1 is associated with p given by $\vec{p}^{Vn} = (1, p, p^2, ..., p^n)$. Unless stated otherwise, all Vandermonde vectors will have length n+1, and for ease of notation we will drop the subscript n. Given a subset $\{p_1, ..., p_m\}$ of $m \leq n$ distinct values, we form the Vandermonde vectors $\vec{p}^{V}_i, ..., \vec{p}^{V}_m$. These m vectors are linearly independent. Thus, these vectors are the base vectors of a subspace A.

Next, we consider all possible tensor products $\vec{p}^{V}_i \oplus \vec{p}^{V}_j$ for i, j=1, ..., $m$. It is known from tensor calculus that these $m^2$ tensor products form the basis of the tensor space $\mathbf{A} = A \oplus A$. For all vectors $\vec{\gamma} \in \mathbf{A}^{\perp}$ it then holds that

$$\left\langle \vec{\gamma}, \vec{p}^{V}_i \otimes \vec{p}^{V}_j \right\rangle = 0$$

Using the above definitions, the polynomial P(x, y) is rewritten as an inner product:

$$P(x, y) = \left\langle \vec{t}, \vec{x}^{V} \otimes \vec{y}^{V} \right\rangle$$

where $\vec{t}$ denotes the vector $(t_{00}, ..., t_{0n}, t_{10}, ..., t_{nn})$. That is, it contains the entries of the matrix T. In its rewritten form, P is still symmetric.

We then choose $m$ distinct elements $p_1, ..., p_m$. With these elements, we build Vandermonde vectors $\vec{p}^{V}_i$ and tensor products $\vec{p}^{V}_i \otimes \vec{p}^{V}_j$ from the Vandermonde vectors. We then choose a vector $\vec{\gamma}$ from the perpendicular space $\mathbf{A}^{\perp}$ of the space $\mathbf{A}$, as explained above. The rewritten form of the polynomial P can then be evaluated in points chosen from the preferred set $\{ p_1, ..., p_m \}$. The vector $\vec{\gamma}$ can be added to the vector $\vec{t}$ and because $\vec{\gamma} \in \mathbf{A}^{\perp}$ we have

$$P(p_i, p_j) = \left\langle \vec{t} + \vec{\gamma}, \vec{p}^{V}_i \otimes \vec{p}^{V}_j \right\rangle = \left\langle \vec{t}, \vec{p}^{V}_i \otimes \vec{p}^{V}_j \right\rangle + \left\langle \vec{\gamma}, \vec{p}^{V}_i \otimes \vec{p}^{V}_j \right\rangle = \left\langle \vec{t}, \vec{p}^{V}_i \otimes \vec{p}^{V}_j \right\rangle$$

In other words, if we derive from the vector $\vec{\gamma} = (\gamma_1, ..., \gamma_{(n+1)^2})$ a matrix

$$\Gamma = \begin{pmatrix} \gamma_1 & \gamma_{n+2} & \cdots & \gamma_{n^2+n+1} \\ \vdots & \vdots & \ddots & \vdots \\ \gamma_{n+1} & \gamma_{2n+2} & \cdots & \gamma_{(n+1)^2} \end{pmatrix}$$

and add this matrix r to the matrix T, we still have $P(p_i, p_j) = P(p_j, p_i)$ for all $p_i$ and $p_j$ in the preferred set.

The above observations are used by the TTP to set up the system by performing the following operations:

  1. The TTP chooses a random symmetric (n+1) $\times$ (n+1) matrix T and preferably an arbitrary value r.

2. The TTP chooses $m$ distinct random elements $p_1, ..., p_m$ with $m \leq n$.
3. From the tensor products $\vec{p}_i^{\,V} \otimes \vec{p}_j^{\,V}$ the TTP calculates the space **A**.
4. From the $m$ elements $p_1, ..., p_m$ the TTP preferably chooses the first $m' < m$ elements. This way, the system becomes renewable (explained below in section "RENEWABILITY").

The TTP can then issue devices, that is, provide devices with a share of the global secret to allow these devices to (mutually) authenticate themselves with other devices with a share of the global secret. Such devices are often referred to as certified devices or authorized devices. Next to mutually authenticating other certified devices, a certified device can also detect an unauthorized device, usually because authentication with that device fails.

In order to issue a device, the TTP performs the following steps:

1. For a device $i$, the TTP randomly chooses $\vec{\gamma}_i \in \mathbf{A}^\perp$ and $p_i$ randomly from the set with $m$ elements $p_1, ..., p_m$, preferably from the chosen subset with $m'$ elements.
2. The TTP generates a matrix $\Gamma_i$ from $\vec{\gamma}_i$ and forms the matrix $T_{\Gamma_i} = T + \Gamma_i$
3. From $T_{\Gamma_i}$, the TTP builds the bivariate polynomial $P(x, y)$ and calculates the coefficients of the uni-variate polynomial $P(p_i, y)$ which can be expressed as $T_{\Gamma_i} \vec{p}_i^{\,V}$.
4. The TTP distributes the values $p_i$, $r \cdot q_i$ and the vector $q_i T_\Gamma \vec{p}_i^{\,V}$ to the device $i$.

Having received their respective information, as indicated in Fig. 5, the parties P and V now exchange their values $p_i$ and $r_i \cdot r \cdot q_i$ and generate their respective secrets $S_1$ and $S_2$ as follows:

$$ S_i = Q_{q_i}(r_i r_j r q_j) P_{p_i}^{\Gamma_i}(p_j) = r_i r_j r q_j \left\langle q_i T_{\Gamma_i} \vec{p}_i^{\,V}, \vec{p}_j^{\,V} \right\rangle $$

If $S_1 = S_2$, then the parties have generated a common secret. The parties can implicitly conclude that the other party also knows the secret, or explicitly verify that the other party knows the same secret. This is discussed below at "SECRET VERIFICATION".

RENEWABILITY

An important aspect of any authentication or common key generation scheme for a system like the system 100 is renewability. The TTP may wish to periodically replace the secrets installed in the devices 101-105 to foil adversaries who have managed to gain unauthorized access to the original secrets.

The embodiments illustrated in Fig. 5 can be used to introduce renewability into the system 100, by exploiting the properties explained in the previous sections. Initially the TTP issues devices using only the elements $p_1, ..., p_{m'}$ with $m' < m \leq n$ so that $\vec{p}_i^{\,V} \oplus \vec{p}_j^{\,V}$ with $i, j \in \{1, ..., m'\}$ span a space **A'**. However, the matrices $T_\Gamma = T + \Gamma$ use $\Gamma$'s derived from $\vec{\gamma} \in \mathbf{A}^\perp$. If we denote the polynomial stored in a device $i$ by $T_\Gamma \vec{p}_i^{\,V}$, then that device contains the pair $(T_\Gamma \vec{p}_i^{\,V}, p_i)$.

Now we assume that somehow an adversary was able to retrieve the $m'$ elements $p_i$ and also some device polynomial $T_\Gamma \vec{p}_i^{\,V}$, for example by breaking open a device. The adversary can now generate a new vector $\vec{\gamma}' \in \mathbf{A}'^\perp$ and issue devices containing $((T_\Gamma + \Gamma') \vec{p}_i^{\,V}, p_i)$. These devices will work with all compliant devices containing one of the values $p_1, ..., p_{m'}$: the adversary's device receives $p_j \in \{p_1, ..., p_m\}$ from a compliant device and evaluates

$$ P(p_i, p_j) = \left\langle \vec{\iota} + \vec{\gamma}_i + \vec{\gamma}', \vec{p}_i^{\,V} \otimes \vec{p}_j^{\,V} \right\rangle = \left\langle \vec{\iota}, \vec{p}_i^{\,V} \otimes \vec{p}_j^{\,V} \right\rangle $$

and the second party evaluates

$$ P(p_j, p_i) = \left\langle \vec{\iota} + \vec{\gamma}_i, \vec{p}_j^{\,V} \otimes \vec{p}_i^{\,V} \right\rangle = \left\langle \vec{\iota}, \vec{p}_j^{\,V} \otimes \vec{p}_i^{\,V} \right\rangle = \left\langle \vec{\iota}, \vec{p}_i^{\,V} \otimes \vec{p}_j^{\,V} \right\rangle $$

which shows that both evaluations are equal.
If the TTP notices that such devices are issued by an adversary, the TTP can start to issue devices using

$p_{m'+1}$, ..., $p_m$ with m' < m'' ≤m, such that tensor products of $\vec{p}_1^{\,V}...\vec{p}_{m''}^{\,V}$ span a space **A''** . Note that $\textbf{A''}^\perp$ ⊂ $\textbf{A'}^\perp$. Therefore these new devices will work with the adversary's device if the adversary had chosen $\vec{\gamma}' \in \textbf{A''}^\perp$. If $\vec{\gamma}'$ is chosen randomly in $\textbf{A'}^\perp$ the probability that it is also in $\textbf{A''}^\perp$ is very small.

This provides the system with a certain amount of renewability: the new compliant devices issued by the TTP do not work with the adversary's devices with a very high probability. The maximum number of times the system can be renewed is *m - 1 < n* with *n* the degree of the polynomial P. This occurs when with each renewal one value of $p_i \in$ {$p_1$, ..., $p_m$} is added.

SECRET VERIFICATION

After the parties have each independently generated the secret, the next step of the protocol is verifying that the other party knows the secret. If one of the parties can prove to the other party that he knows the secret, then this party is authenticated to the other party. Additionally, the other party may similarly authenticate himself to the first party to achieve mutual authentication.

Having verified that the prover knows the secret, the verifier can then use the secret $S_1$ to securely communicate some piece of information to the prover. For instance, an encryption key necessary to access encrypted content can be encrypted with $S_1$. The result can be transmitted to the prover, which in turn can recover the encryption key using $S_2$ (which is equal to $S_1$, as proven by the successful verification) and then decrypt and access the encrypted content.

There are several ways to verify that a party knows the secret generated as above. Two preferred embodiments are based on zero-knowledge protocols and commitment-based protocols.

ZERO-KNOWLEDGE BASED VERIFICATION

First, verification based on zero-knowledge (ZK) protocols will be discussed. ZK-protocols are discussed in the *Handbook of Applied Cryptography* by A. Menezes, P. van Oorschot and S. van Stone, CRC Press 1996, pp. 405-416. In a preferred embodiment, the Guillou-Quisquater (GQ) zero-knowledge protocol is used, because it is efficient in terms of memory requirements and communication. The GQ protocol is known from US 5,140,634 (attorney docket PHQ 87030) by the same assignee as the present application.

As explained above with reference to Figs. 4 and 5, both parties P and V have evaluated their polynomials and thus obtained values $S_1$ and $S_2$, respectively. Either party must now prove to the other party in ZK that he knows $S_i$. Since the GQ protocol is based on public key cryptography, we need a composite number *m = pq* which is the product of two primes *p* and *q* and a number *e > 1* such that *gcd(e, (p-1)(q-1)) = 1.*

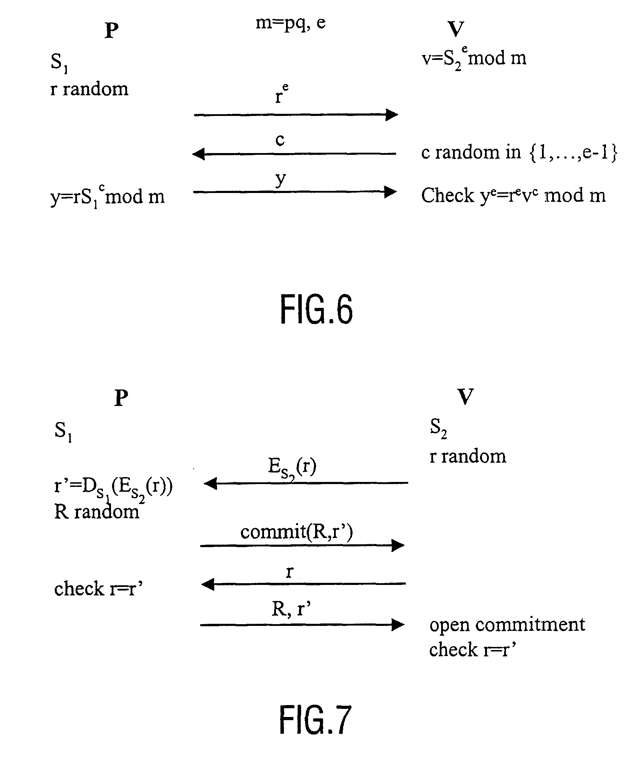

P will prove to V that he knows the *e*-th root of $S_2^e$ mod *m*. The GQ protocol is illustrated in Fig. 6 where the values *e* and *m* are public. The protocol proceeds in accordance with the following steps:

1. V calculates $v = S_2^e$,
2. P chooses a random number $r \in$ {2, ..., *m*-1} and sends $r^e$ to V,
3. V chooses a random challenge $c \in$ {1, ..., *e*-1} and sends *c* to P
4. P replies with $y = rS_1^c$,
5. V computes $y^e$ and concludes that P knows the same secret as V if and only if $y^e = (rS_1^c)^e$ mod $m = r^e v^c$ mod $m = r^e(S_2^e)^c$ mod $m = (rS_2^c)^e$ mod *m*, since this implies that $S_1=S_2$.

Because of the ZK properties of the protocol, V nor an eavesdropper will learn anything about the secret $S_1$ of P. On acceptance of P by V, the roles of P and V are interchanged and V will show to P that he knows the *e*-th root of $S_1^e$ mod *m*. This way, P and V are mutually authenticated.

The set-up of the protocol differs slightly from what is found in the literature: normally, $v = S_2^e$ is published and if P anticipates a challenge *c\**, he can send as a first message $z^e v^{-c^*}$ and still be accepted by V without knowledge of $S_2$. The probability of choosing the proper challenge is $e^{-1}$. In the current set-up it is not necessary to publish $v = S_2^e$ and this makes it impossible for P to calculate $v^{-c^*}$ from an anticipated challenge and this reduces the probability of unjust acceptance to $m^{-1}$. Therefore e can be chosen as low as 2, effectively transforming GQ into a Fiat-Shamir protocol but with an error probability $m^{-1}$ in one round. This means that the devices only have to perform modular exponentiations with small exponents in contrast with e.g. RSA.

To make it even more efficient, one might consider an implementation using a Montgomery representation (see P.L. Montgomery, Modular multiplication without trial division, Mathematics of Computation, Vol.44, no.170, April 1985, pp. 519-521).

COMMITMENT-BASED VERIFICATION

As an alternative for ZK protocols, a commitment-based protocol can be used to allow one party to verify that the other party knows the secret. An advantage of this approach is that symmetric key cryptography can be used, which can be implemented very efficiently.

In contrast to the previous situation, both parties P and V play the role of verifier and prover simultaneously which makes the protocol efficient in terms of communication. As before P computed $S_1$ and V computed $S_2$, respectively. The protocol (see Fig. 7) goes through the following steps:

1. V chooses a random number r with length matching the block length of the symmetric cipher.
2. V encrypts $r$ using a symmetric cipher with $S_2$ as a key, and sends the encryption $E_{S2}(r)$ to P,
3. P decrypts the message using $S_1$. The result is $r' = D_{S_1}(E_{S_2}(r))$.
4. P chooses a random number $R$ and sends a commitment on $r'$ to V. The commitment is obtained as a function $commit(R, r')$, discussed below.
5. V sends $r$ to P and P checks if $r' = r$ and stops further communication with V if this is not the case,
6. P sends $r'$ and $R$ to V. V opens the commitment and checks if $r' = r$ and stops further communication with P if the check is not satisfied.

The *commit* function should implement the binding and hiding properties of the commitment. Binding refers to P's ability to change the value $r'$ in the commitment. It must be difficult or impossible for P to find a value R ' such that $commit(R, r') = commit(R', r)$. The hiding property refers to the ability of V to obtain information on $r'$ after receiving $commit(R, r')$. In practice, cryptographic hash functions or one-way functions are often used as commit functions.

In this set-up the symmetric cipher used to encrypt $r$ can also be used as the *commit* function. The hiding property is trivially satisfied, because without knowledge of the randomly chosen R, V can not get information on $r'$, independent of the amount of computing power of V. Hence the commitment is unconditionally hiding. The binding property follows from the fact that for a symmetric cipher, $E_K(x) = z$ is known to be a one-way function in K with $x$ and $z$ known: given $E_R(r)$ and r it is not known how to find a value $R'$ such that $E_R(r) = E_R(r')$ in less than $2^{55}$ operations. The commitment is thus computationally binding.

Next we consider the completeness and the soundness of the protocol. Completeness refers to the case that both parties execute the protocol correctly and $S_1 = S_2$. It then follows by inspection and the symmetry properties of the symmetric cipher that when $S_1 = S_2$, they will find $r = r'$.

Soundness refers to the situation of mutual acceptance when P does not know $S_1$ or V does not know $S_2$. To be unjustly accepted, P can send any value z as a commitment to V. After receiving $r$ from V, P must find a value $R'$ such that $commit(R', r) = E_{R'}(r) = z$. As explained above, $E_K(x) = z$ is a one-way function in K for $x$ and $z$ given which makes finding $R'$ a difficult problem.

Similarly, if V does not know $S_2$ he can choose any value $z$ to P who will reply with $E_R(D_{S2}(z))$. To be accepted, V has to obtain $D_{S2}(z)$ which is very difficult because the commitment is unconditionally hiding due to the random value $R$. If $S_1$ happens to be a weak DES encryption key, V will be accepted if he chooses z such that $D_{S1}(z) = z$. For a weak key there are $2^{32}$ of such fixed points and the probability on unjust acceptance by P is $2^{32}/2^{64} = 2^{-32}$.

SOME ADVANTAGES OF THE INVENTION

The method according to the invention achieves a substantial saving in terms of required energy (power) in the devices in which it is executed, as well as a substantial saving in terms of processing time compared to authentication based on RSA.

In general, the power consumption depends on the architecture of the implementation. For example, varying the architecture, one can trade power consumption for clock speed. A second important factor is the technology which is used: modem technologies with small minimum feature sizes and low supply voltages will in general require less power than older technologies.

The table below gives an estimate of the required effort for the different parts of the protocols in terms of $n$ (the degree of the polynomial), $k$ (length in bits of a value), $l$ (length in bits of the GQ modulus) and $h$ (length in bits of the RSA modulus). The estimated effort is expressed in terms of single precision multiplications (sp-mults) i.e. the multiplication of two bits in the context of a multiplication of two k-bit numbers.

| Subprotocol | Required effort |
|---|---|
| Polynomial evaluation | $k^2(n + 3)$ sp-mults |

(continued)

| Subprotocol | Required effort |
|---|---|
| GQ protocol | $20l^2$ sp-mults |
| Commit protocol | 100,000 gate transitions |
| RSA protocol | $\frac{3}{4}h^3$ sp-mults |

The table below shows estimates for the required energy for the subprotocols in Joule for a number of values for *n, k, l* and *h* and the amount of processing time when the invention is used in a Chip-In-Disc application with an available power of 0.5mW.

| | n=128 k=64 l=512 h = 512 | n=512 k = 64 l=512 h = 512 | n=128 k= 128 l=1024 h = 1024 | n=512 k= 128 l=1024 h = 1024 | n=2048 k = 64 l=1024 h = 1024 |
|---|---|---|---|---|---|
| Polynomial | 471n | 1.86µ | 1.86µ | 7.35µ | 7.47µ |
| GQ | 4.51µ | 4.51µ | 18.0µ | 18.0µ | 18.0µ |
| Commit | 2n | 2n | 2n | 2n | 2n |
| Polynomial + GQ | 4.98µ | 6.37µ | 19.9µ | 25.4µ | 25.5µ (52ms) |
| Polynomial + Commit | 473n | 1.87µ | 1.87µ | 7.36µ | 7.47µ (15ms) |
| RSA | 86.5µ | 86.5µ | 692µ | 692µ | 692µ (1.4s) |

One should note that the values above are based on an estimate for the required energy per sp-mult. The real energy depends on the chosen architecture, layout, optimization goal in the design process (e.g. power or speed), etc. Nevertheless, the data in the above table give insight in the ratios of the energies required for the different protocols. It can be seen in the last column that, even for polynomials of degree 2048 and 64 bit values, the new protocols are a factor 30 to 100 more efficient than RSA.

In the special case of CID, which has a maximum of 0.5mW power available, we derive that an RSA protocol would require approximately 1 second, while the protocols based on symmetric polynomials requires at most 52ms.

It should be noted that the above-mentioned embodiments illustrate rather than limit the invention, and that those skilled in the art will be able to design many alternative embodiments without departing from the scope of the appended claims. While in the above the authentication method has been set out in the context of content protection and digital rights management, the invention is of course not restricted to this context.

The invention can be considered as a universal building block for authentication at interfaces between any pair of components and/or devices, especially when low power consumption is important. As such it can for instance also be applied in CD2, in set-top boxes, in wireless smartcards, wired or wireless networks, et cetera. The invention is also useful when a human verifier needs to authenticate a human prover using two respective interconnected devices.

It will be clear that where in the above the term "random number" or "arbitrarily chosen number" is used, this includes numbers chosen using a pseudo-random number generator implemented in hardware and/or software, with or without seed values derived from truly random events. The security of the method depends for a great deal on the quality of the pseudo-random number generator.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In the device claim enumerating several means, several of these means can be embodied by one and the same item of hardware. The mere fact that certain measures are recited in mutually different dependent claims does not indicate that a combination of these measures cannot be used to advantage.

**Claims**

1. A method of generating a common secret between a first party and a second party, in which the first party holds a value $p_1$ and a symmetrical polynomial $P(x,y)$ fixed in the first argument by the value $p_1$, and the first party performs the steps of sending the value $p_1$ to the second party, receiving a value $p_2$ from the second party and evaluating the polynomial $P(p_1, y)$ in $p_2$, **characterized in that** the first party additionally holds a value $q_1$ and a symmetrical polynomial $Q(x, z)$ fixed in the first argument by the value $q_1$, and further performs the steps of sending $q_1$ to the second party, receiving a value $q_2$ from the second party and calculating the secret $S_1$ as $S_1=Q(q_1, q_2)$ $\cdot P(p_1, p_2)$.

2. The method of claim 1, in which the first party further performs the steps of obtaining a random number $r_1$, calculating $r_1 \cdot q_1$, sending $r_1 \cdot q_1$ to the second party, receiving $r_2 \cdot q_2$ from the second party and calculating the secret $S_1$ as $S_1=Q(q_1, r_1 \cdot r_2 \cdot q_2) \cdot P(p_1, p_2)$.

3. The method of claim 2, in which the first party holds the value $q_1$ multiplied by an arbitrarily chosen value r, and the product $Q(q_1, z)P(p_1, y)$ instead of the individual polynomials $P(p_1, y)$ and $Q(q_1, z)$, and the first party performs the steps of calculating $r_1 \cdot r \cdot q_1$, sending $r_1 \cdot r \cdot q_1$ to the second party, receiving $r_2 \cdot r \cdot q_2$ from the second party and calculating the secret $S_1$ as $S_1=Q(q_1, r_1 \cdot r_2 \cdot r \cdot q_2) \cdot P(p_1, p_2)$.

4. The method of claim 1, in which the second party holds a value $p_2$ and a value $q_2$, the symmetrical polynomial $P(x, y)$ fixed in the first argument by the value $p_2$, the symmetrical polynomial $Q(x, z)$ fixed in the first argument by the value $q_2$, and the second party performs the steps of sending $q_2$ to the first party, receiving $q_1$ from the first party and calculating a secret $S_2$ as $S_2=Q(q_2, q_1) \cdot P(p_2, p_1)$, whereby the common secret has been generated if the secret $S_2$ equals the secret $S_1$.

5. The method of claim 1, in which a trusted third party performs the steps of choosing a symmetric (n+1) x (n+1) matrix T, constructing the polynomial P using entries from the matrix T as respective coefficients of the polynomial P, constructing the polynomial $Q(x, y)$, choosing the value $p_1$, the value $p_2$, the value $q_1$ and the value $q_2$, sending the value $p_1$, the value $q_1$, the polynomial $P(x, y)$ fixed in the first argument by the value $p_1$ and the polynomial $Q(x, z)$ fixed in the first argument by the value $q_1$ to the first party, and sending the value $p_2$, the value $q_2$, the polynomial $P(x, y)$ fixed in the first argument by the value $p_2$ and the polynomial $Q(x, z)$ fixed in the first argument by the value $q_2$ to the second party.

6. The method of claim 5, in which the trusted third party further arbitrarily chooses a value r, sends the value $r \cdot q_1$ instead of the value $q_1$ and the product $Q(q_1, z)P(p_1, y)$ instead of the individual polynomials $P(p_1, y)$ and $Q(q_1, z)$ to the first party and sends the value $r \cdot q_2$ instead of the value $q_2$ and the product $Q(q_2, z)P(p_2, y)$ instead of the individual polynomials $P(p_2, y)$ and $Q(q_2, z)$ to the second party.

7. The method of claim 5, in which the trusted third party further performs the steps of
   choosing a set comprising m values $p_i$, including the values $p_1$ and $p_2$,
   calculating a space **A** from the tensor products $\vec{p}_i^V \oplus \vec{p}_j^V$ of the Vandermonde vectors $\vec{p}_i^V$ built from the set of values $p_i$,
   choosing a vector $\vec{\gamma}_1$ and a vector $\vec{\gamma}_2$ from the perpendicular space $\mathbf{A}^\perp$ of the space **A**, constructing a matrix $T_{\Gamma_1} = T + \Gamma_1$ from the vector $\vec{\gamma}_1$ and a matrix $T_{\Gamma_2} = T + \Gamma_2$ from the vector $\vec{\gamma}_2$, being $\vec{\gamma}_1$ and $\vec{\gamma}_2$ vectors of the type $\vec{\gamma} = (\gamma_1,..., \gamma_{(n+1)^2})$ and $\Gamma_1$ and $\Gamma_2$ matrices of the type

$$\Gamma = \begin{pmatrix} \gamma_1 & \gamma_{n+2} & \cdots & \gamma_{n^2+n+1} \\ \vdots & \vdots & \ddots & \vdots \\ \gamma_{n+1} & \gamma_{2n+2} & \cdots & \gamma_{(n+1)^2} \end{pmatrix}$$

constructing a polynomial $P^{\Gamma_1}(x, y)$ using entries from the matrix $T_{\Gamma_1}$ and sending the polynomial $P^{\Gamma_1}(x, y)$ fixed in the first argument by the value $p_1$ to the first party, and
   constructing a polynomial $P^{\Gamma_2}(x, y)$ using entries from the matrix $T_{r2}$ and sending the polynomial $P^{\Gamma_2}(x,y)$ fixed in the first argument by the value $p_2$ to the second party.

**EP 1 486 027 B1**

8. The method of claim 5, in which a number $m'$ of values $p_i$, and $m' < m$, are distributed to additional parties.

9. The method of claim 1, in which the first party and the second party use a non-linear function on the generated secret S1 and S2, respectively, before using it as a secret key in further communications.

10. The method of claim 9 in which a one-way hash function is applied to the generated secrets S1 and S2.

11. The method of claim 9 in which a non-linear function in the form of a polynomial is applied to the generated secrets S1 and S2.

12. The method of claim 1, further comprising the step of verifying that the second party knows the secret $S_1$.

13. The method of claim 12, in which the first party subsequently applies a zero-knowledge protocol to verify that the second party knows the secret $S_1$.

14. The method of claim 12, in which the first party subsequently applies a commitment-based protocol to verify that the second party knows the secret $S_1$.

15. The method of claim 14, in which the second party uses a symmetric cipher to encrypt a random challenge, and sends the encrypted random challenge to the first party and the first party subsequently uses the same symmetric cipher as a commit function to commit himself to a decryption of the encrypted random challenge.

16. A system (100) comprising a first party (P), a second party (V) and a trusted third party (TTP), arranged to execute the method of any of the claims above.

17. A device (P) arranged to operate as the first party and/or as the second party in the system of claim 16.

18. The device of claim 17, comprising storage means (303) for storing the polynomial P and the polynomial Q in the form of their respective coefficients.

19. A computer program product for causing one or more processors to execute the method of any of the claims 1-15 above.

**Patentansprüche**

1. Verfahren zum Erzeugen eines gemeinsamen Geheimnisses zwischen einer ersten Partie und einer zweiten Partie, wobei die erste Partie einen Wert $p_1$ hat und ein symmetrisches Polynom P(x,y), fest in dem ersten Argument durch den Wert $p_1$, und die erste Partie die nachfolgenden Schritte durchführt: das Senden des Wertes $p_1$ zu der zweiten Partie, das Empfangen eines Wertes $p_2$ von der zweiten Partie und das Bewerten des Polynoms $P(p_1,y)$ in $p_2$, **dadurch gekennzeichnet, dass** die erste Partie außerdem einen Wert $q_1$ hat und ein symmetrisches Polynom Q(x,z), fest in dem ersten Argument durch den Wert $q_1$, und weiterhin die nachfolgenden Verfahrensschritte durchführt: das Senden von $q_1$ zu der zweiten Partie, das Empfangen eines Wertes $q_2$ von der zweiten Partie und das Berechnen des Geheimnisses $S_1$ als $S_1 = Q(q_1, q_2) \cdot P(p_1, p_2)$.

2. Verfahren nach Anspruch 1, wobei die erste Partie weiterhin die nachfolgenden Verfahrensschritte durchführt: das Erhalten einer beliebigen Zahl $r_1$, das Berechnen von $r_1 \cdot q_1$, das Senden von $r_1 \cdot q_1$ zu der zweiten Partie, das Empfangen von $r_2 \cdot q_2$ von der zweiten Partie und das Berechnen des Geheimnisses $S_1$ als $S_1 = Q(q_1, r_1 \cdot r_2 \cdot q_2) \cdot P(p_1, p_2)$.

3. Verfahren nach Anspruch 2, wobei die erste Partie den Wert $q_1$ multipliziert mit einem beliebig gewählten Wert r, und das Produkt $Q(q_1,z)P(p_1,y)$ statt der einzelnen Polynome $P(p_1,y)$ und $Q(q_1,z)$ hat, und die erste Partie die nachfolgenden Verfahrensschritte durchführt: das Berechnen von $r_1 \cdot r \cdot q_1$, das Senden von $r_1 \cdot r \cdot q_1$ zu der zweiten Partie, das Empfangen von $r_2 \cdot r \cdot q_2$ von der zweiten Partie und das Berechnen des Geheimnisses $S_1$ als $S_1 = Q(q_1, r_1 \cdot r_2 \cdot r \cdot q_2) \cdot P(p_1,p_2)$.

4. Verfahren nach Anspruch 1, wobei die zweite Partie einen Wert $p_2$ und einen Wert $q_2$ hat, wobei das symmetrische Polynom P(x,y) in dem ersten Argument durch den Wert $p_2$ fest ist, wobei das symmetrische Polynom Q(x,z) in

**13**

dem ersten Argument durch den Wert $q_2$ fest ist, und wobei die zweite Partie die nachfolgenden Verfahrensschritte durchführt: das Senden von $q_2$ zu der ersten Partie, das Empfangen von $q_1$ von der ersten Partie und das Berechnen eines Geheimnisses $S_2$ als $S_2 = Q(q_2, q_1) \cdot P(p_2, p_1)$, wobei das gemeinsame Geheimnis erzeugt worden ist, wenn das Geheimnis $S_2$ dem Geheimnis $S_1$ entspricht.

**5.** Verfahren nach Anspruch 1, wobei eine vertraute dritte Partie die nachfolgenden Verfahrensschritte durchführt: das Wählen einer symmetrischen (n+1) x (n-1) Matrix, das Konstruieren des Polynoms P unter Verwendung von Eingaben von der Matrix T als betreffende Koeffizienten des Polynoms P, das Konstruieren des Polynoms Q(x,y), das Wählen des Wertes $p_1$, des Wertes $p_2$, des Wertes $q_1$ und des Wertes $q_2$, das Senden des Wertes $p_1$, des Wertes $q_1$, des Polynoms P(x,y) in dem ersten Argument durch den Wert $p_1$ befestigt und des Polynoms Q(x,z) in dem ersten Argument durch den Wert $q_1$ befestigt, zu der ersten Partie, und das Senden des Wertes $p_2$, des Wertes $q_2$, des Polynoms P(x,y) in dem ersten Argument durch den Wert $p_2$ befestigt und des Polynoms Q(x,z) in dem ersten Argument durch den Wert $q_2$ befestigt, zu der zweiten Partie.

**6.** Verfahren nach Anspruch 5, wobei die vertraute dritte Partie weiterhin beliebig einen Wert r wählt, den Wert $r \cdot q_1$ statt des Wertes $q_1$ und das Produkt $Q(q_1, z)P(p_1, y)$ statt der einzelnen Polynome $P(p_1, y)$ und $Q(q_1, z)$ zu der ersten Partie sendet und den Wert $r \cdot q_2$ statt des Wertes $q_2$ und das Polynom $Q(q_2, z)P(p_2, y)$ statt der einzelnen Polynome $P(p_2,y)$ und $Q(q_2, z)$ zu der zweiten Partie sendet.

**7.** Verfahren nach Anspruch 5, wobei die vertraute dritte Partie weiterhin die nachfolgenden Verfahrensschritte durchführt:

- das Wählen eines Satzes mit m Werten $p_i$, einschließlich der Werte $p_1$ und $p_2$,
- das Berechnen eines Raumes A aus den Tensorprodukten $\vec{P}_i^{\,v} \otimes \vec{P}_j^{\,v}$ der Vandermonde Vektoren $\vec{P}_i^{\,v}$, die aus dem Satz von Werten $p_i$ gebaut wurden,
- das Wählen eines Vektors $\vec{\gamma}_1$ und eines Vektors $\vec{\gamma}_2$ aus dem senkrechten Raum $A^{\perp}$ das Raums A, das Konstruieren einer Matrix $T_{\Gamma_1} = T + r$, aus dem Vektor $\vec{\gamma}_1$ und einer Matrix $T_{\Gamma_2} = T + \Gamma_2$ aus dem Vektor $\vec{\gamma}_2$, wobei $\vec{\gamma}_1$ und $\vec{\gamma}_2$ Vektoren von dem Typ $\vec{\gamma} = (\gamma_1,...,\gamma_{(n+1)^2})$ sind und $\Gamma^1$ und $\Gamma^2$ Matrices von dem Typ

$$\Gamma = \begin{pmatrix} \gamma_1 & \gamma_{n+2} & \cdots \gamma_{n^2+n+1} \\ \cdot & \cdot & \cdot \\ \cdot & \cdot & \\ \gamma_{n+1} & \gamma_{2n+2} & \cdots \gamma_{(n+1)^2} \end{pmatrix},$$

sind, das Konstruieren eines Polynoms $P^{\Gamma_1}(x, y)$ unter Verwendung von Eingaben von der Matrix $T_{\Gamma_1}$ und das Senden des Polynoms $P^{\Gamma_1}(x, y)$ durch den Wert $p_1$ in dem ersten Argument befestigt, zu der ersten Partie, und
- das Konstruieren eines Polynoms $P^{\Gamma_2}(x, y)$ unter Verwendung von Eingaben von der Matrix $T_{\Gamma_1}$ und das Senden des Polynoms $P^{\Gamma_2}(x, y)$ durch den Wert $p_2$ in dem ersten Argument befestigt, zu der zweiten Partie.

**8.** Verfahren nach Anspruch 5, wobei eine Anzahl m' von Werten $p_i$ und m' < m, zu zusätzlichen Partien verteilt werden.

**9.** Verfahren nach Anspruch 1, wobei die erste Partie und die zweite Partie eine nicht lineare Funktion an dem erzeugten Geheimnis S1 bzw. S2 verwendet bevor dieses als geheimer Schlüssel bei weiterer Kommunikation verwendet wird.

**10.** Verfahren nach Anspruch 9, wobei eine Einweg-Hash-Funktion auf die erzeugten Geheimnisse S 1 und S2 angewandt wird.

**11.** Verfahren nach Anspruch 9, wobei eine nicht lineare Funktion in Form eines Polynoms auf die erzeugen Geheimnisse S1 und S2 angewandt wird.

**12.** Verfahren nach Anspruch 1, wobei dieses Verfahren weiterhin den nachfolgenden Verfahrensschritt umfasst: das Überprüfen, ob die zweite Partie das Geheimnis $S_1$ kennt.

**13.** Verfahren nach Anspruch 12, wobei die erste Partie daraufhin ein Null-Kenntnis-Protokoll anwendet um zu überprüfen, ob die zweite Partie das Geheimnis $S_1$ kennt.

**14.** Verfahren nach Anspruch 12, wobei die erste Partie daraufhin ein auf Verbindlichkeit basiertes Protokoll anwendet um zu überprüfen, ob die zweite Partie das Geheimnis $S_1$ kennt.

**15.** Verfahren nach Anspruch 14, wobei die zweite Partie einen symmetrischen Geheimcode verwendet um eine beliebige Aufforderung zu verschlüsseln, und die verschlüsselte beliebige Aufforderung der ersten Partie zusendet und die erste Partie daraufhin denselben symmetrischen Geheimcode als verpflichtete Funktion verwendet um sich zu einer Entschlüsselung der verschlüsselten beliebigen Aufforderung zu verpflichten.

**16.** System (100) mit einer ersten Partie (P), einer zweiten Partie (V) und einer vertrauten Partie (TTP), vorgesehen zum Durchrühren des Verfahrens nach einem der oben stehenden Patentansprüche.

**17.** Anordnung (P) vorgesehen zum Arbeiten als erste Partie und/oder als zweite Partie in dem System nach Anspruch 16.

**18.** Anordnung nach Anspruch 17, mit Speichermitteln (303) zum Speichern des Polynoms P und des Polynoms Q in Form der betreffenden Koeffizienten.

**19.** Computerprogrammprodukt um dafür zu sorgen, dass ein oder mehrere Prozessoren das Verfahren nach einem der oben stehenden Ansprüche 1 - 15 durchführen.

**Revendications**

**1.** Procédé de génération d'un secret commun entre une première entité et une seconde entité, dans lequel la première entité détient une valeur $p_1$ et un polynôme symétrique $P(x,y)$ dont le premier argument est fixé à la valeur $p_1$, et la première entité exécute les étapes d'envoi de la valeur $p_1$ à la seconde entité, de réception d'une valeur $p_2$ de la seconde entité et d'évaluation du polynôme $P(p_1, y)$ en $p_2$, **caractérisé en ce que** la première entité détient en outre une valeur $q_1$ et un polynôme symétrique $Q(x, z)$ dont le premier argument est fixé à la valeur $q_1$, et exécute en outre les étapes d'envoi de $q_1$ à la seconde entité, de réception d'une valeur $q_2$ de la seconde entité et du calcul du secret $S_1$ sous la forme $S_1 = Q(q_1, q_2) \cdot P(p_1, p_2)$.

**2.** Procédé selon la revendication 1, **caractérisé en ce que** la première entité exécute en outre les étapes d'obtention d'un nombre aléatoire $r_1$, de calcul de $r_1 \cdot q_1$, d'envoi de $r_1 \cdot q_1$ à la seconde entité, de réception de $r_2 \cdot q_2$ de la seconde entité et de calcul du secret $S_1$ sous la forme $S_1 = Q(q_1, r_1 . r_2 \cdot q_2) \cdot P(p_1, p_2)$.

**3.** Procédé selon la revendication 2, **caractérisé en ce que** la troisième entité détient la valeur $q_1$ multipliée par une valeur $r$ choisie arbitrairement, et le produit $Q(q_1, z)P(p_1, y)$ au lieu des polynômes individuels $P(p_1, y)$ et $Q(q_1, z)$, et **en ce que** la première entité exécute les étapes de calcul de $r_1 \cdot r \cdot q_1$, d'envoi de $r_1 \cdot r \cdot q_1$ à la seconde entité, de réception de $r_2 \cdot r \cdot q_2$ de la seconde entité et de calcul du secret $S_1$ sous la forme $S_1 = Q(q_1, r_1 . r_2 \cdot r \cdot q_2) \cdot P(p_1, p_2)$.

**4.** Procédé selon la revendication 1, **caractérisé en ce que** la seconde entité détient une valeur $p_2$ et une valeur $q_2$, le polynôme symétrique $P(x, y)$ dont le premier argument est fixé à la valeur $p_2$, le polynôme symétrique $Q(x, z)$ dont le premier argument est fixé à la valeur $q_2$, et **en ce que** la seconde entité exécute les étapes d'envoi de $q_2$ à la première entité, de réception de $q_1$ de la première entité et de calcul d'un secret $S_2$ sous la forme $S_2 = Q(q_2, q_1) \cdot P(p_2, p_1)$, d'où il résulte que le secret commun a été généré si le secret $S_2$ est égal au secret $S_1$.

**5.** Procédé selon la revendication 1, **caractérisé en ce qu'**un tiers de confiance exécute les étapes de choix d'une matrice $T (n+1) \times (n+1)$ symétrique, de construction du polynôme P en utilisant des entrées provenant de la matrice T comme coefficients respectifs du polynôme P, de construction du polynôme $Q(x, y)$, de choix de la valeur $p_1$, de la valeur $p_2$, de la valeur $q_1$ et de la valeur $q_2$, d'envoi à la première entité de la valeur $p_1$, de la valeur $q_1$, du polynôme $P(x, y)$ dont le premier argument est fixé à la valeur $p_1$ et du polynôme $Q(x, z)$ dont le premier argument est fixé à la valeur $q_1$, et d'envoi à la seconde entité de la valeur $p_2$, de la valeur $q_2$, du polynôme $P(x, y)$ dont le premier argument est fixé à la valeur $p_2$ et du polynôme $Q(x, z)$ dont le premier argument est fixé à la valeur $q_2$.

**6.** Procédé selon la revendication 5, **caractérisé en ce que** le tiers de confiance choisit en outre de façon arbitraire une valeur r, envoie à la première entité la valeur r·$q_1$ au lieu de la valeur $q_1$ et le produit $Q(q_1, z)P(p_1, y)$ au lieu des polynômes individuels $P(p_1, y)$ et $Q(q_1, z)$ et envoie à la seconde entité la valeur r·$q_2$ au lieu de la valeur $q_2$ et le produit $Q(q_2, z)P(p_2, y)$ au lieu des polynômes individuels $P(p_2, y)$ et $Q(q_2, z)$.

**7.** Procédé selon la revendication 5, **caractérisé en ce que** le tiers de confiance exécute en outre les étapes :

de choix d'un ensemble comprenant *m* valeurs $p_i$, y compris les valeurs $p_1$ et $p_2$,
de calcul d'un espace **A** à partir des produits tensoriels $\vec{p}_i^{\,V} \otimes \vec{p}_j^{\,V}$ des vecteurs de Vandermonde $\vec{p}_i^{\,V}$ construits à partir de l'ensemble de valeurs $p_i$,
de choix d'un vecteur $\vec{\gamma}_1$ et d'un vecteur $\vec{\gamma}_2$ dans l'espace $\mathbf{A}^\perp$ de l'espace **A**, en construisant une matrice $T_{\Gamma_1}$ = T+$\Gamma_1$ à partir du vecteur $\vec{\gamma}_1$ et une matrice $T_{\Gamma_2}$ = T+$\Gamma_2$ à partir du vecteur $\vec{\gamma}_2$, étant entendu que $\vec{\gamma}_1$ et $\vec{\gamma}_2$ sont des vecteurs du type $\vec{\gamma}$ =$(\gamma_1,...,\gamma_{(n+1)^2})$ et $\Gamma_1$ et $\Gamma_2$ sont des matrices du type :

$$\Gamma = \begin{pmatrix} \gamma_1 & \gamma_{n+2} & \cdots & \gamma_{n^2+n+1} \\ \vdots & \vdots & \ddots & \vdots \\ \gamma_{n+1} & \gamma_{2n+2} & \cdots & \gamma_{(n+1)^2} \end{pmatrix}$$

en construisant un polynôme $P^{\Gamma_1}(x, y)$ en utilisant des entrées provenant de la matrice $T_{\Gamma_1}$ et en envoyant à la première entité le polynôme $P^{\Gamma_1}(x, y)$ dont le premier argument est fixé à la valeur $p_1$ et
de construction d'un polynôme $P^{\Gamma_2}(x, y)$ en utilisant des entrées provenant de la matrice $T_{\Gamma_2}$ et en envoyant à la seconde entité le polynôme $P^{\Gamma_2}(x, y)$ dont le premier argument est fixé à la valeur $p_2$.

**8.** Procédé selon la revendication 5, **caractérisé en ce qu'**un nombre *m′* de valeurs $p_i$, et *m′ < m,* sont distribuées à des entités supplémentaires.

**9.** Procédé selon la revendication 1, **caractérisé en ce que** la première entité et la seconde entité utilisent une fonction non linéaire des secrets $S_1$ et $S_2$ respectivement générés avant de les utiliser comme clé secrète dans d'autres communications.

**10.** Procédé selon la revendication 9, **caractérisé en ce qu'**une fonction de hachage unidirectionnelle est appliquée aux secrets $S_1$ et $S_2$ générés.

**11.** Procédé selon la revendication 9, **caractérisé en ce qu'**une fonction non linéaire sous la forme d'un polynôme est appliquée aux secrets $S_1$ et $S_2$ générés.

**12.** Procédé selon la revendication 1, comprenant en outre l'étape de vérification du fait que la seconde entité connaît le secret S1.

**13.** Procédé selon la revendication 12, **caractérisé en ce que** la première entité applique ensuite un protocole à connaissance nulle pour vérifier que la seconde entité connaît le secret $S_1$.

**14.** Procédé selon la revendication 12, **caractérisé en ce que** la première entité applique ensuite un protocole à base d'engagement pour vérifier que la seconde entité connaît le secret $S_1$.

**15.** Procédé selon la revendication 14, **caractérisé en ce que** la seconde entité utilise un chiffrement symétrique pour crypter un défi aléatoire et envoie le défi aléatoire crypté à la première entité et **en ce que** la première entité utilise ensuite le même chiffrement symétrique comme fonction d'engagement pour s'engager à décrypter le défi aléatoire crypté.

**16.** Système (100) comprenant une première entité (P), une seconde entité (V) et un tiers de confiance (TTP), conçu pour exécuter le procédé selon l'une quelconque des revendications précédentes

**17.** Dispositif (P) conçu pour fonctionner en tant que première entité et/ou seconde entité dans le système selon la revendication 16.

18. Dispositif selon la revendication 17, comprenant des moyens de stockage (303) pour stocker le polynôme P et le polynôme Q sous la forme de leurs coefficients respectifs.

19. Produit à base de programme informatique pour faire en sorte qu'un ou plusieurs processeurs exécutent le procédé selon l'une quelconque des revendications 1-15 ci-dessus.

P                                          V

$p_1$                                      $p_2$

$P_{p_1}(y)$                               $P_{p_2}(y)$

$$\xrightarrow{\quad p_1 \quad} \quad S_2 = P_{p_2}(p_1)$$

$$S_1 = P_{p_1}(p_2) \xleftarrow{\quad p_2 \quad}$$

# FIG.1

# FIG.3

FIG.2

EP 1 486 027 B1

**P**                                        **V**

$p_1, rq_1$                                  $p_2, rq_2$

$Q_{q_1}(z) P_{p_1}(y)$                       $Q_{q_2}(z) P_{p_2}(y)$

$r_1$ random                                 $r_2$ random

$$\xrightarrow{\quad p_1 \quad r_1 rq_1 \quad}$$

$$S_2 = Q_{q_2}(r_2 r_1 rq_1) P_{p_2}(p_1)$$

$$S_1 = Q_{q_1}(r_1 r_2 rq_2) P_{p_1}(p_2) \xleftarrow{\quad p_2 \quad r_2 rq_2 \quad}$$

# FIG.4

**P**                                        **V**

$p_1, rq_1$                                  $p_2, rq_2$

$Q_{q_1}(z) P_{p_1}^{\Gamma_1}(y)$           $Q_{q_2}(z) P_{p_2}^{\Gamma_2}(y)$

$r_1$ random                                 $r_2$ random

$$\xrightarrow{\quad p_1 \quad r_1 rq_1 \quad}$$

$$S_2 = Q_{q_2}(r_1 r_2 rq_1) P_{p_2}^{\Gamma_2}(p_1)$$

$$S_1 = Q_{q_1}(r_1 r_2 rq_2) P_{p_1}^{\Gamma_1}(p_2) \xleftarrow{\quad p_2 \quad r_2 rq_2 \quad}$$

# FIG.5

**P** $\qquad$ m=pq, e $\qquad$ **V**

$S_1$

$v=S_2^{e} \bmod m$

r random

$r^{e}$ $\longrightarrow$

$\longleftarrow$ c

c random in $\{1,\ldots,e-1\}$

$y=rS_1^{c} \bmod m$ $\xrightarrow{\quad y \quad}$ Check $y^e = r^e v^c \bmod m$

# FIG.6

**P** $\qquad\qquad\qquad$ **V**

$S_1$

$S_2$

$\xleftarrow{\quad E_{S_2}(r) \quad}$

r random

$r'=D_{S_1}(E_{S_2}(r))$

R random

$\xrightarrow{\quad commit(R,r') \quad}$

check r=r' $\xleftarrow{\quad r \quad}$

$\xrightarrow{\quad R, r' \quad}$ open commitment

check r=r'

# FIG.7